# EUROPEAN PATENT APPLICATION

(11) **EP 4 411 876 A1**
(43) Date of publication of application: **07.08.2024**
(21) Application number: 22890374.6
(22) Date of filing: 02.11.2022
(51) Int. Cl.: H01M 4/36, H01M 4/62, H01M 4/525, H01M 4/505, H01M 10/052, H01M 4/02

(54) **CATHODE MATERIAL, AND CATHODE AND LITHIUM SECONDARY BATTERY COMPRISING SAME**

(30) Priority: 03.11.2021 KR 20210150057
(71) Applicant: LG Energy Solution, Ltd., Seoul 07335 (KR)
(72) Inventor: HAN, Gi Beom, Daejeon 34122 (KR); KIM, Jong Woo, Daejeon 34122 (KR); LEE, Sang Wook, Daejeon 34122 (KR); KIM, Hak Yoon, Daejeon 34122 (KR); BAEK, So Ra, Daejeon 34122 (KR); LHO, Eun Sol, Daejeon 34122 (KR); HAN, Jung Min, Daejeon 34122 (KR); JUNG, Hae Jung, Daejeon 34122 (KR); JUNG, Wang Mo, Daejeon 34122 (KR); LEE, Young Hwan, Daejeon 34122 (KR); CHUNG, Dae Sik, Daejeon 34122 (KR); PARK, Su Han, Daejeon 34122 (KR)
(74) Representative: Hoffmann Eitle
(86) International application number: PCT/KR2022/017061
(87) International publication number: WO 2023/080643

(57) **Abstract**

The present invention relates to a positive electrode material including a positive electrode active material comprising a lithium nickel-based oxide having a mole fraction of nickel of 50 mol% to 90 mol% among metallic elements excluding lithium; and a coating layer including boron (B), which is formed on the surface of the lithium nickel-based oxide, wherein the positive electrode material has a BET specific surface area of 0.2 m²/g to 0.4 m²/g, and the boron (B) is included in an amount of 500 ppm to 1,000 ppm based on the total weight of the positive electrode material.

## Description

### TECHNICAL FIELD

### Cross-reference to Related Applications

This application claims the benefit of Korean Patent Application No. 10-2021-0150057, filed on November 03, 2021, the disclosure of which is incorporated herein in its entirety by reference.

### Technical Field

The present invention relates to a positive electrode material, a positive electrode including the same, and a lithium secondary battery, and more specifically, to a positive electrode material having a less increase in initial resistance, excellent life characteristics, and less fine powders generated during manufacturing an electrode, and a positive electrode including the positive electrode material, and a lithium secondary battery.

### BACKGROUND ART

A lithium secondary battery generally includes a positive electrode, a negative electrode, a separator, and an electrolyte, and the positive electrode and the negative electrode include an active material capable of intercalation and deintercalation of lithium ions.

Lithium cobalt oxide (LiCoO₂), lithium nickel oxide (LiNiO₂), lithium manganese oxide (LiMnO₂, LiMnO₄, or the like), a lithium iron phosphate compound (LiFePO₄), or the like has been used as a positive electrode active material of the lithium secondary battery. Among these, the lithium cobalt oxide has the advantage of high operating voltage and excellent capacity characteristics, but it is difficult to commercially apply the lithium cobalt oxide to large-capacity batteries due to the high price and unstable supply of cobalt as a raw material. The lithium nickel oxide has poor structural stability, and thus it is difficult to achieve sufficient lifetime characteristics. Meanwhile, the lithium manganese oxide has excellent stability, but has a limitation of poor capacity characteristics. Accordingly, lithium composite transition metal oxides including two or more transition metals have been developed to compensate for limitations of lithium transition metal oxides including Ni, Co, or Mn alone, and among these, lithium nickel cobalt manganese oxides including Ni, Co, and Mn are used widely.

Lithium nickel cobalt manganese oxides generally have the form of a spherical secondary particle in which several tens to several hundreds of primary particles are aggregated, and there is a limitation in that particle breakage, in which the primary particles of the lithium nickel cobalt manganese oxides fall off in a rolling process during manufacturing a positive electrode, occurs. When the particle breakage of the positive electrode active material occurs, since a contact area with the electrolyte solution increases, gas generation and degradation of the active material due to a side reaction with the electrolyte solution are increased, and as a result, there is a limitation in that life characteristics are degraded.

In order to improve the life characteristics of the lithium nickel cobalt manganese oxide, techniques have been proposed for suppressing contact with an electrolyte solution by forming a coating layer on the surface of the lithium nickel cobalt manganese oxide. However, in the case of these methods, there is a limitation in that the effect of improving the life characteristics is not sufficient, and the initial resistance characteristics deteriorate as the thickness of the coating layer increases.

Therefore, there is a need for development of a positive electrode material having less fine powders generated during rolling and being capable of achieving excellent life characteristics.

### DISCLOSURE OF THE INVENTION

### TECHNICAL PROBLEM

An aspect of the present invention provides a positive electrode material having a BET lower than the conventional positive electrode material, containing boron (B) in a certain content, having less particle breakage during manufacturing an electrode, and having excellent life characteristics.

### TECHNICAL SOLUTION

According to an aspect of the present invention, there is provided a positive electrode material including: a positive electrode active material comprising a lithium nickel-based oxide having a mole fraction of nickel of 50 mol% to 90 mol% among metallic elements excluding lithium; and a coating layer comprising boron (B), which is formed on the surface of the lithium nickel-based oxide, wherein the positive electrode material has a BET specific surface area of 0.2 m²/g to 0.4 m²/g, and the boron (B) is included in an amount of 500 ppm to 1,000 ppm based on the total weight of the positive electrode material.

In this case, the lithium nickel-based oxide may have composition represented by Formula 1 below:

[Formula 1] Liₓ[NiₐCo_{b}Mn_{c}M¹_{d}]O₂

In Formula 1 above, M¹ may be at least one selected from the group consisting of Zr, W, Y, Ba, Ca, Ti, Mg, Ta, and Nb, preferably Zr, and 0.8≤x≤1.2, 0.5≤a≤0.9, 0<b<0.5, 0<c<0.5, and 0≤d≤0.2 are satisfied.

Meanwhile, Zr above may be included in an amount of 4,000 ppm to 5,000 ppm based on the total weight of the positive electrode material.

In addition, the coating layer may further include tungsten (W), wherein the tungsten (W) is preferably included in an amount of 4,000 ppm or less based on the total weight of the positive electrode material.

The positive electrode active material may have a crystalline grain size of 90 nm to 110 nm.

The positive electrode active material may be a secondary particle in which multiple primary particles are aggregated, and the primary particles may have an average particle diameter of 500 nm to 1 µm.

The positive electrode active material may have a bimodal particle size distribution, and specifically, may include a large particle-diameter positive electrode active material having an average particle diameter D50 of 8 um or more and a small particle-diameter positive electrode active material having an average particle diameter D50 of 6 um or less. In this case, the large particle-diameter positive electrode active material and the small particle-diameter positive electrode active material is preferably included in a weight ratio of 9:1 to 6:4.

According to another aspect of the present invention, there is provided a positive electrode including the positive electrode material, and a lithium secondary battery including the positive electrode.

### ADVANTAGEOUS EFFECTS

The positive electrode material according to the present invention is characterized in that the BET specific surface area is 0.2 m²/g to 0.4 m²/g, which is lower than that of the conventional positive electrode material, and boron (B) is included in an amount of 500 ppm to 1,000 ppm. When the BET specific surface area and boron content of the positive electrode material simultaneously satisfy the scope of the present invention, the particle breakage during rolling the positive electrode is less and life characteristics are excellent.

### BRIEF DESCRIPTION OF THE DRAWINGS

FIG. 1 is a scanning electron microscope (SEM) image showing the surface shape of a particle of a large particle-diameter positive electrode active material prepared according to Example 8.
FIG. 2 is a scanning electron microscope (SEM) image showing a cross-sectional shape of the particle of the large particle-diameter positive electrode active material prepared according to Example 8.
FIG. 3 is a scanning electron microscope (SEM) image showing the surface shape of a particle of a large particle-diameter positive electrode active material prepared according to Comparative Example 11.
FIG. 4 is a scanning electron microscope (SEM) image showing a cross-sectional shape of the particle of the large particle-diameter positive electrode active material prepared according to Comparative Example 11.

### BEST MODE FOR CARRYING OUT THE INVENTION

Hereinafter, the present invention will be described in more detail.

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

As used herein, the term "primary particle" refers to a particle unit in which an external grain boundary does not exist when observed in the view at a magnification of 5,000 to 20,000 using a scanning electron microscope. The term "average particle diameter of the primary particles" refers to an arithmetic mean value of the particle diameters calculated by measuring the particle diameters of the primary particles observed in the scanning electron microscope image.

As used herein, the term "secondary particle" refers to a particle formed by the aggregation of a plurality of primary particles.

As used herein, the term "average particle diameter D₅₀" refers to a particle size based on 50% of the volume cumulative particle size distribution of the positive electrode active material powder. The average particle diameter D₅₀ may be measured using a laser diffraction method. For example, powder of positive electrode active materials may be dispersed in a dispersion medium, then introduced into a commercially available laser diffraction particle size measuring apparatus (*e.g*., Microtrac MT 3000), irradiated with an ultrasonic wave of about 28 kHz at a 60-W output. Then, after a volume cumulative particle size distribution graph may be obtained, a particle size corresponding to 50% of the volume cumulative amount may be determined to measure the average particle diameter D₅₀.

In the present invention, "crystalline grain size" may be quantitatively analyzed by using X-ray diffraction analysis (XRD) with Cu Kα X-rays. Specifically, particles to be measured is put in a holder and a diffraction grating created by irradiating the particles with X-ray is analyzed so that the average crystal size of the crystalline grains may be quantitatively analyzed. Sampling is prepared by putting a powder sample of the particles to be measured in a groove in the middle of a holder for general powder, using a slide glass to make the surface level, and making the sample height equal to the edge of the holder. Then, X-ray diffraction analysis is performed using a Bruker D8 endeavor (light source: Cu Kα, λ=1.54 Å) equipped with a LynxEye XE-T position sensitive detector under the conditions of step size=0.02° with respect to the region of FDS 0.5°and 2θ=15° to 90°, and the total scan time of about 20 minutes. The Rietveld refinement is performed with respect to the measured data in consideration of the charges (metal ions having +3 at a transition metal site and Ni ions having +2 at a Li site) at each site and cation mixing. In the crystalline grain size analysis, instrumental broadening is considered using Fundamental Parameter Approach (FPA), which is implemented in Bruker TOPAS program, and all peaks in the measurement range at fitting are used. Among the peak types available in TOPAS, a peak shape is fitted using only Lorenzian contribution as a first principal (FP), and in this case, strain is not considered.

In the present invention, the "specific surface area" is measured by a Brunauer-Emmett-Teller (BET) method, and specifically, may be calculated from the amount of nitrogen gas adsorbed at a liquid nitrogen temperature (77K) using BELSORP-mino II made by BEL Japan, Inc.

In the present invention, the content of each component of the positive electrode active material may be measured by inductively coupled plasma mass spectrometry (ICP) . Specifically, a sample to be measured is pre-treated using an acid and then measured using ICP-OES (PerkinElmer, Optima7300DV) equipment.

### Positive Electrode Material

Hereinafter, a positive electrode material according to the present invention will be described.

A positive electrode material according to the present invention includes a positive electrode active material comprising a lithium nickel-based oxide having a mole fraction of nickel of 50 mol% to 90 mol% among metallic elements excluding lithium, and a coating layer including boron (B), formed on the surface of the lithium nickel-based oxide, wherein the positive electrode material has a BET specific surface area of 0.2 m²/g to 0.4 m²/g, and the boron (B) is included in an amount of 500 ppm to 1,000 ppm based on the total weight of the positive electrode material.

Lithium nickel-based oxides conventionally used as positive electrode active materials generally have a specific surface area of 0.5 m²/g to 1.5 m²/g. Such conventional positive electrode active materials have excellent resistance characteristics due to high internal porosity, but there are limitations in that particles are easily broken during manufacturing an electrode, and thus many fine particles are generated, and many side reactions with the electrolyte solution deteriorate life characteristics. When the specific surface area of the positive electrode active material is reduced, the particle breakage is reduced, thereby achieving an effect of improving life characteristics, but the initial resistance is increased, resulting in a limitation in that the output characteristics and the initial capacity characteristics deteriorate. As a result of a significant amount of researches conducted for solving such limitations, the present inventors have found that when the positive electrode material containing a specific content of boron is used while the specific surface area of the positive electrode material powder is reduced to a level of 0.2 m²g to 0.4 m²g, it is possible to minimize an increase in resistance as well as improve particle breakage and life characteristics during rolling the positive electrode, thereby leading to the completion of the present invention.

Specifically, the positive electrode material according to the present invention includes a positive electrode active material including a lithium nickel-based oxide and a coating layer which is formed on the surface of the lithium nickel-based oxide and includes boron (B).

The lithium nickel-based oxide may be a lithium nickel cobalt manganese-based oxide having a mole fraction of nickel of 50 mol% to 90 mol%, preferably 60 mol% to 90 mol%, and more preferably 65 mol% to 85 mol%, among metallic elements excluding lithium.

More specifically, the lithium nickel-based oxide above may have composition represented by Formula 1 below:

[Formula 1] Liₓ[NiₐCo_{b}Mn_{c}M¹_{d}]O₂

In Formula 1 above, M¹ may be at least one selected from the group consisting of Zr, W, Y, Ba, Ca, Ti, Mg, Ta, and Nb, preferably at least one selected from the group consisting of Zr, Y, Mg, and Ti, and more preferably Zr. The M¹ element is not necessarily included, but when included in an appropriate amount, the M¹ element may serve to promote particle growth during the sintering or improve the crystal structure stability.
x above denotes a molar ratio of lithium in the lithium nickel-based oxide, and may satisfy 0.8≤x≤1.2, 0.9≤x≤1.1, or 1≤x≤1.1.
a above denotes a molar ratio of nickel among metals excluding lithium in the lithium nickel-based oxide, and may satisfy 0.5≤a≤0.9, 0.6≤a≤0.9, 0.65≤a≤0.85, or 0.65≤a≤0.80.
b above denotes a molar ratio of cobalt among metals excluding lithium in the lithium nickel-based oxide, and may satisfy 0<b<0.5, 0.01≤b≤0.4, 0.01≤b≤0.3, or 0.05≤b≤0.2.
c above denotes a molar ratio of manganese among metals excluding lithium in the lithium nickel-based oxide, and may satisfy 0<c<0.5, 0.01≤c≤0.4, 0.05≤c≤0.4, or 0.1≤b≤0.4.
d above denotes a molar ratio of the M¹ element among metals excluding lithium in the lithium nickel-based oxide, and may satisfy 0≤d≤0.2 or 0≤d≤0.1.

Preferably, the lithium nickel-based oxide may be a lithium nickel cobalt manganese oxide doped with Zr. When Zr is doped, the effect of suppressing the particle breakage during rolling an electrode is superior. In this case, Zr above may be included in an amount of 3,000 ppm to 6,000 ppm, preferably 3,500 ppm to 5,500 ppm, and more preferably 4,000 ppm to 5,000 ppm based on the total weight of the positive electrode material. When the Zr content satisfies the above range, a decrease in capacity may be minimized as well as the particle breakage may be effectively suppressed.

Next, the coating layer is formed on the surface of the lithium nickel-based oxide and includes boron (B). When the coating layer including boron (B) is formed on the surface of the lithium nickel-based oxide, the contact between the electrolyte solution and the lithium nickel-based oxide is minimized by the coating layer so that side reactions between the electrolyte solution and the lithium nickel-based oxide and elution of the transition metal are suppressed, thereby achieving effects of improving life characteristics and reducing the particle breakage during rolling.

In this case, the boron (B) is included in an amount of 500 ppm to 1,000 ppm based on the total weight of the positive electrode material. When the boron (B) content is out of the above range, the effects of improving the life characteristics, reducing particle breakage, and suppressing an increase in resistance are insignificant.

Meanwhile, the coating layer may further include tungsten (W) in addition to boron. When tungsten is additionally included in the coating layer, the effect of reducing the lithium by-product remaining on the surface of the lithium nickel-based oxide and the effect of suppressing an increase in the initial resistance are superior to the case when boron is included alone.

In this case, the tungsten (W) is preferably included in an amount of 4,000 ppm or less, preferably, 3,500 ppm to 4,000 ppm based on the total weight of the positive electrode material. When the tungsten content satisfies the above range, superior effects may be obtained in terms of reducing residual lithium and suppressing an increase in initial resistance.

Meanwhile, the positive electrode active material may have a crystalline grain size of 80 nm to 150 nm, preferably 80 nm to 120 nm, and more preferably 90 nm to 110 nm. When the crystal grain size of the positive electrode active material satisfies the above range, an effect of improving cycle characteristics may be obtained.

Meanwhile, the positive electrode active material may be in the form of a secondary particle in which multiple primary particles are aggregated, and in this case, the average particle diameter of the primary particles may be 1 µm or less, preferably, 500 nm to 1 µm. When the average particle diameter of the primary particles satisfies the above range, an effect of improving cycle characteristics may be obtained.

Meanwhile, the positive electrode active material according to the present invention may have a bimodal particle size distribution, and specifically, may include a large particle-diameter positive electrode active material having an average particle size D₅₀ of 8 µm or more, preferably 8 µm to 20 µm, and more preferably 8 µm to 15 µm, and a small particle-diameter positive electrode active material having an average particle size D₅₀ of 6 µm or less, preferably 2 µm to 6 µm, and more preferably 3 µm to 5 µm. When the positive electrode material has a bimodal particle size distribution, the small particle-diameter positive electrode active material particles are filled in the pores between the large particle-diameter positive electrode active material particles during manufacturing the positive electrode, thereby increasing electrode density and increasing the contact area between the positive electrode active material particles so that the effect of improving the energy density may be obtained.

The composition of the large particle-diameter positive electrode active material and the small particle-diameter positive electrode active material may be the same, and the only average particle diameter thereof may be different, or both the composition and the average particle diameter may be different.

Meanwhile, at least one of the large particle-diameter positive electrode active material or the small particle-diameter positive electrode active material may be the positive electrode active material of the present invention as described above, that is, the positive electrode active material including the lithium nickel-based oxide and the coating layer including boron as described above, and preferably, both the large particle-diameter positive electrode active material and the small particle-diameter positive electrode active material may be the positive electrode active material of the present invention as described above.

Meanwhile, the positive electrode material according to the present invention may include the large particle-diameter positive electrode active material and the small particle-diameter positive electrode active material in a weight ratio of 9:1 to 6:4, preferably 8:2 to 6:4. When the mixing ratio of the large particle-diameter positive electrode active material and the small particle-diameter positive electrode active material satisfies the above range, the effect of suppressing the particle breakage during rolling is superior. This is because if there are too many large particle-diameter positive electrode active materials, the number of contacts between the large particles increases, and thus the particle breakage during rolling may increase, and if there are too many small particle-diameter positive electrode active materials, the total density of the positive electrode active material may decrease and thus the particle breakage may increase.

The positive electrode material according to the present invention has a BET specific surface area of 0.2 m²/g to 0.4 m²/g, preferably 0.25 m²/g to 0.35 m²/g, and includes boron (B) in an amount of 500 ppm to 1,000 ppm, preferably 600 ppm to 900 ppm, based on the total weight of the positive electrode material. In this case, the BET specific surface area and the B content are values measured in the positive electrode material powder, and are distinguished from the BET specific surface area and the B content of each individual positive electrode active material particle. For example, when the large particle-diameter positive electrode active material and the small particle-diameter positive electrode active material having different composition are included, the BET specific surface area and the B content of each of the large particle-diameter positive electrode active material and the small particle-diameter positive electrode active material may be different from the BET specific surface area and the B content of the total positive electrode material powder.

Meanwhile, the BET specific surface area of the positive electrode material is determined by the combination of the density of the positive electrode active material precursor, the sintering temperature, and the coating element content. Accordingly, by appropriately adjusting the density of the precursor, the sintering temperature, and the coating element content, a positive electrode material having a desired BET may be prepared.

According to the research conducted by the present inventors, when the BET specific surface area and the boron content of the positive electrode material satisfy the above ranges at the same time, the life characteristics, initial resistance characteristics, and the effect of suppressing the particle breakage are all excellent, and particularly, the life characteristics and the effect of suppressing the particle breakage are significantly improved. Specifically, even though the BET specific surface area of the positive electrode material satisfies 0.2 m²/g to 0.4 m²/g, when the boron content is out of the above range, or even though the boron content of the positive electrode material satisfies 500 ppm to 1,000 ppm, when the BET specific surface area is out of the above range, the life characteristics and the effect of suppressing the particle breakage are insignificant.

### Method for Preparing Positive Electrode Material

Next, a method for preparing the positive electrode material of the present invention will be described.

The positive electrode material according to the present invention may be prepared by preparing a lithium nickel-based oxide by mixing a precursor for a positive electrode active material with a lithium raw material and then sintering the mixture, and forming a coating layer by mixing the lithium nickel-based oxide and a boron-containing coating raw material and then heat-treating the mixture.

In order to prepare a positive electrode material having a low BET specific surface area, it is preferable to use a precursor for a positive electrode active material having a high density, and the density of the precursor for a positive electrode active material can be adjusted through pH adjustment during the co-precipitation reaction. Specifically, in the present invention, the precursor for a positive electrode active material may have a BET specific surface area of 5 m²/g to 50 m²/g, preferably 10 m²/g to 30 m²/g, and more preferably 10 m²/g to 15 m²/g.

Specifically, the precursor for a positive electrode active material may be prepared by a method for forming precursor particles for a positive electrode active material by reacting a transition metal aqueous solution, an ammonium cation complex forming agent, and a basic compound while supplying them into a reactor.

In this case, the transition metal aqueous solution may include nickel, cobalt, and manganese elements, and may be formed by mixing a nickel raw material, a cobalt raw material, and a manganese raw material with water.

The nickel raw material may be Ni(OH)₂, NiO, NiOOH, NiCO₃·2Ni(OH)₂·4H₂O, NiC₂O₂·2H₂O, Ni(NO₃)₂·6H₂O, NiSO₄, NiSO₄·6H₂O, a fatty acid nickel salt, a nickel halide, or the like, and any one thereof or a mixture of two or more thereof may be used.

The cobalt raw material may be Co(OH)₂, CoOOH, Co(OCOCH₃)₂·4H₂O, Co (NO₃)₂·6H₂O, Co(SO₄)₂·7H₂O, or the like, and any one thereof or a mixture of two or more thereof may be used.

The manganese raw material may be a manganese oxide such as Mn₂O₃, MnO₂, and Mn₃O₄; a manganese salt such as MnCO₃, Mn(NO₃)₂, MnSO₄, manganese acetate, manganese dicarboxylate, manganese citrate, and a fatty acid manganese salt; oxyhydroxide, manganese chloride, or the like, and any one thereof or a mixture of two or more thereof may be used.

As necessary, the transition metal aqueous solution may further include a doping element (M¹) in addition to nickel, cobalt, and manganese. In this case, the M¹ may include at least one selected from the group consisting of Zr, W, Y, Ba, Ca, Ti, Mg, Ta, and Nb. When the positive electrode active material further includes the doping element, the effect of improving life characteristics, discharge characteristics, and/or stability may be achieved.

When the transition metal aqueous solution further includes the doping element M¹, the doping element M¹-containing raw material may be optionally further added when the transition metal aqueous solution is prepared.

As the doping element M¹-containing raw material, at least one selected from the group consisting of acetate, sulfate, sulfide, hydroxide, oxide, or oxyhydroxide, which contains the doping element M¹, may be used.

Meanwhile, the ammonium cation complex forming agent may be at least one selected from the group consisting of NH₄OH, (NH₄)₂SO₄, NH₄NO₃, NH₄Cl, CH₃COONH₄, and NH₄CO₃, and may be introduced into the reactor in the form of a solution in which the compound is dissolved in a solvent. As the solvent, water or a mixture of water and an organic solvent (specifically, alcohol *etc*.), which may be uniformly mixed with the water, may be used.

Next, the basic compound may be at least one compound selected from the group consisting of NaOH, KOH, and Ca(OH)₂, and may be introduced into the reactor in the form of a solution in which the compound is dissolved in a solvent. In this case, as the solvent, water or a mixture of water and an organic solvent (specifically, alcohol *etc*.), which may be uniformly mixed with the water, may be used.

In the step for forming precursor particles, the pH of the reaction solution may be 8 to 11, preferably 9 to 10, and the temperature of the reaction solution may be 40 °C to 60 °C, preferably 45 °C to 55 °C. The pH of the reaction solution may be controlled by adjusting the input amount of the basic compound using a pH sensor or the like. When the pH and the temperature of the reaction solution satisfy the above range, the precursor particles may be smoothly grown and a precursor having a high density may be prepared.

When the precursor particles are sufficiently grown through the above process, the precursor particles may be separated from the reaction solution, washed, and then dried to obtain the precursor particles for a positive electrode active material.

Next, the precursor for a positive electrode active material is mixed with a lithium raw material and then sintered to prepare the positive electrode active material.

The lithium raw material is not particularly limited as long as it is a compound including a lithium source, and preferably, at least one selected from the group consisting of lithium carbonate (Li₂CO₃), lithium hydroxide (LiOH), LiNO₃, CH₃COOLi, and Li₂(COO)₂ may be used.

The precursor and the lithium raw material may be mixed so that the molar ratio of the transition metal (Me) and lithium (Li) contained in the precursor is in a ratio of 1:1 to 1:1.2, preferably 1:1 to 1:1.1. If the lithium raw material is mixed in a ratio less than the above range, the capacity of the prepared positive electrode active material may be reduced, and, if the lithium raw material is mixed in a ratio greater than the above range, since particles are sintered during a sintering process, the preparation of the positive electrode active material may be difficult, the capacity may be reduced, and the positive electrode active material particles may be separated after the sintering.

In addition, as necessary, the M¹-containing material may be further mixed during the sintering. The doping element M¹ may be, for example, at least one selected from the group consisting of Zr, W, Y, Ba, Ca, Ti, Mg, Ta, and Nb, and the doping element M¹-containing raw material may be at least one selected from the group consisting of acetate, sulfate, sulfide, hydroxide, oxide, or oxyhydroxide, which contains the doping element M¹.

The sintering may be performed at 800 °C to 1,000 °C for 10 hours to 35 hours, preferably, 850 °C to 950 °C for 15 hours to 30 hours, but is not limited thereto.

Next, the lithium nickel-based oxide and a boron-containing coating raw material are mixed and then heat-treated to form a coating layer.

The boron-containing coating raw material may be, for example, H₂BO₃, HBO₂, H₃BO₃, H₂B₄O₇, B₂O₃, C₆H₅B(OH)₂, (C₆H₅O)₃B, (CH₃(CH₂)₃₀)₃B, C₃H₉B₃O₆, (C₃H₇O₃)B, or the like. The coating raw material is mixed in an amount such that the boron (B) content is 500 ppm to 1,000 ppm based on the total weight of the positive electrode material.

As necessary, a tungsten-containing coating raw material may be mixed together when the coating layer is formed. The tungsten-containing coating raw material may be, for example, WO₃, Li₃WO₄, (NH₄)₁₀W₁₂O₄₁·5H₂O, or the like. The tungsten-containing coating raw material is preferably mixed in an amount such that the tungsten content is 4,000 ppm or less based on the total weight of the positive electrode material.

Meanwhile, the mixing of the lithium nickel-based oxide and the coating raw materials may be performed by solid-phase mixing, and the heat treatment may be performed at 200 °C to 700 °C, or 300 °C to 600 °C, but the embodiments are not limited thereto.

Meanwhile, when the positive electrode material according to the present invention is a bimodal positive electrode material including a large particle-diameter positive electrode active material and a small particle-diameter positive electrode active material, the positive electrode material according to the present invention may be prepared by a method for respectively preparing a large particle-diameter lithium nickel-based oxide and a small particle-diameter lithium nickel-based oxide, then mixing the large particle-diameter lithium nickel-based oxide with the small particle-diameter lithium nickel-based oxide to form a mixture, mixing the mixture with a boron-containing coating raw material, and then heat-treating the mixture to form a coating layer on the surfaces of the large particle-diameter lithium nickel-based oxide and the small particle-diameter lithium nickel-based oxide.

### Positive Electrode

Next, a positive electrode according to the present invention will be described.

The positive electrode according to the present invention includes the positive electrode material according to the present invention as described above. Specifically, the positive electrode includes a positive electrode collector and a positive electrode active material layer which is formed on the positive electrode collector and includes the positive electrode material of the present invention as described above.

In the positive electrode, the positive electrode collector is not particularly limited as long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used. Also, the positive electrode collector may typically have a thickness of 3 um to 500 µm, and microscopic irregularities may be formed on the surface of the collector to improve the adhesion of the positive electrode active material. The positive electrode collector, for example, may be used in various shapes such as a film, a sheet, a foil, a net, a porous body, a foam body, and a non-woven fabric body.

Also, the positive electrode active material layer may include a conductive agent and a binder together with the above-described positive electrode material.

The conductive agent is used to provide conductivity to the electrode, wherein any conductive agent may be used without particular limitation as long as it has suitable electron conductivity without causing adverse chemical changes in the battery. Specific examples of the conductive agent may include graphite such as natural graphite or artificial graphite; carbon based materials such as carbon black, acetylene black, Ketjen black, channel black, furnace black, lamp black, thermal black, carbon fibers, and carbon nanotubes; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one alone thereof or a mixture of two or more thereof may be used. The conductive agent may be typically included in an amount of 1 wt% to 30 wt%, preferably 1 wt% to 20 wt%, and more preferably 1 wt% to 10 wt% with respect to the total weight of the positive electrode active material layer.

The binder serves to improve the adhesion between the positive electrode active material particles and the adhesion between the positive electrode active material and the positive electrode collector. Specific examples of the binder may include polyvinylidene fluoride (PVDF), polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer rubber (EPDM rubber), a sulfonated EPDM, a styrene-butadiene rubber (SBR), a fluorine rubber, or various copolymers thereof, and any one alone thereof or a mixture of two or more thereof may be used. The binder may be included in an amount of 1 wt% to 30 wt%, preferably 1 wt% to 20 wt%, and more preferably 1 wt% to 10 wt% with respect to the total weight of the positive electrode active material layer.

The positive electrode may be prepared according to a typical method of preparing a positive electrode. For example, the positive electrode may be prepared by mixing a positive electrode active material, a binder, and/or a conductive agent in a solvent to prepare a positive electrode slurry, coating the positive electrode slurry on a positive electrode collector, and then drying and rolling the coated positive electrode collector. In this case, types and amounts of the positive electrode active material, the binder, and the conductive agent are the same as those previously described.

The solvent may be a solvent normally used in the art. The solvent may include dimethyl sulfoxide (DMSO), isopropyl alcohol, N-methylpyrrolidone (NMP), acetone, or water, and any one thereof or a mixture of two or more thereof may be used. An amount of the solvent used may be sufficient if the solvent may dissolve or disperse the positive electrode active material, the conductive agent, and the binder in consideration of a coating thickness of a slurry and manufacturing yield, and may allow to have a viscosity that may provide excellent thickness uniformity during the subsequent coating for the preparation of the positive electrode.

Alternatively, the positive electrode may be prepared by casting the positive electrode slurry on a separate support and then laminating a film separated from the support on the positive electrode collector.

### Lithium Secondary Battery

Next, a lithium secondary battery according to the present invention will be described.

The lithium secondary battery of the present invention includes the positive electrode according to the present invention. Specifically, the lithium secondary battery includes a positive electrode, a negative electrode disposed to face the positive electrode, a separator interposed between the positive electrode and the negative electrode, and an electrolyte, wherein the positive electrode is as described above. Also, the lithium secondary battery may further selectively include a battery container accommodating an electrode assembly of the positive electrode, the negative electrode, and the separator, and a sealing member for sealing the battery container.

In the lithium secondary battery, the negative electrode includes a negative electrode collector and a negative electrode active material layer disposed on the negative electrode collector.

The negative electrode collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, the negative electrode collector may typically have a thickness of 3 um to 500 µm, and, similar to the positive electrode collector, microscopic irregularities may be formed on the surface of the collector to improve the adhesion of the negative electrode active material. The negative electrode collector, for example, may be used in various shapes such as a film, a sheet, a foil, a net, a porous body, a foam body, and a non-woven fabric body.

The negative electrode active material layer selectively includes a binder and a conductive agent in addition to the negative electrode active material.

A compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic material alloyable with lithium such as Si, Al, Sn, Pb, Zn, Bi, In, Mg, Ga, Cd, a Si alloy, a Sn alloy, or an Al alloy; a metal oxide which may be doped and undoped with lithium such as SiO_{β}(0<β<2), SnO₂, vanadium oxide, and lithium vanadium oxide; or a composite including the metallic material and the carbonaceous material such as a Si-C composite or a Sn-C composite, and any one thereof or a mixture of two or more thereof may be used.

Also, a metallic lithium thin film may be used as the negative electrode active material. Furthermore, both low crystalline carbon and high crystalline carbon may be used as the carbon material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes.

The conductive agent is used to provide conductivity to the electrode, wherein any conductive agent may be used without particular limitation as long as it has suitable electron conductivity without causing adverse chemical changes in the battery. Specific examples of the conductive agent may include graphite such as natural graphite or artificial graphite; carbon based materials such as carbon black, acetylene black, Ketjen black, channel black, furnace black, lamp black, thermal black, carbon fibers, and carbon nanotubes; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one alone thereof or a mixture of two or more thereof may be used. The conductive agent may be typically included in an amount of 1 wt% to 30 wt%, preferably 1 wt% to 20 wt%, and more preferably 1 wt% to 10 wt% with respect to the total weight of the negative electrode active material layer.

The binder serves to improve the adhesion between the negative electrode active material particles and the adhesion between the negative electrode active material and the negative electrode collector. Specific examples of the binder may include polyvinylidene fluoride (PVDF), polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer rubber (EPDM rubber), a sulfonated EPDM, a styrene-butadiene rubber (SBR), a fluorine rubber, or various copolymers thereof, and any one alone thereof or a mixture of two or more thereof may be used. The binder may be included in an amount of 1 wt% to 30 wt%, preferably 1 wt% to 20 wt%, and more preferably 1 wt% to 10 wt% with respect to the total weight of the negative electrode active material layer.

The negative electrode active material layer may be prepared by, for example, coating, on a negative electrode collector, a negative electrode slurry containing a negative electrode active material, and optionally a binder and a conductive agent and drying the coated negative electrode collector, or by casting the negative electrode slurry on a separate support and then laminating a film separated from the support on the negative electrode collector.

In the lithium secondary battery, the separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

Also, the electrolyte used in the present invention may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, the carbonate-based solvent may be used, and, for example, a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) may be used.

The lithium salt may be used without particular limitation as long as it is a compound capable of providing lithium ions used in the lithium secondary battery. Specifically, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, LiB(C₂O₄)₂, or the like may be used as the lithium salt. It is preferable to use the lithium salt in a concentration range of 0.1 M to 5.0 M, preferably, 0.1 M to 3.0 M. When the concentration of the lithium salt is included within the above range, the electrolyte may have suitable conductivity and viscosity, thereby exhibiting excellent performance, and lithium ions may effectively move.

In order to improve lifetime characteristics of the battery, suppress the reduction in battery capacity, and improve discharge capacity of the battery, additives may be additionally included in the electrolyte in addition to the above electrolyte components. For example, any one alone or a mixture of a haloalkylene carbonate-based compound such as difluoro ethylenecarbonate, pyridine, triethylphosphite, triethanolamine, cyclic ether, ethylene diamine, n-glyme, hexamethylphosphoric acid triamide, nitrobenzene derivatives, sulfur, quinone imine dye, N-substituted oxazolidinone, N,N-substituted imidazolidine, ethylene glycol dialkyl ether, an ammonium salt, pyrrole, 2-methoxy ethanol, or aluminum trichloride may be used as the additive, but the embodiment of the present invention is not limited thereto. The additive may be included in an amount of 0.1 wt% to 10 wt%, preferably, 0.1 wt% to 5 wt% with respect to the total weight of the electrolyte.

As described above, since the lithium secondary battery including the positive electrode active material according to the present invention stably exhibits excellent discharge capacity, output characteristics, and capacity retention, the lithium secondary battery is suitable for portable devices, such as mobile phones, notebook computers, and digital cameras, and electric cars such as hybrid electric vehicles (HEVs).

Thus, according to another embodiment of the present invention, a battery module including the lithium secondary battery as a unit cell and a battery pack including the battery module are provided.

The battery module or the battery pack may be used as a power source of at least one medium and large sized device of a power tool; electric cars including an electric vehicle (EV), a hybrid electric vehicle (HEV), and a plug-in hybrid electric vehicle (PHEV); or a power storage system.

### MODE FOR CARRYING OUT THE INVENTION

Hereinafter, examples of the present invention will be described in detail in such a manner that it may easily be carried out by a person with ordinary skill in the art to which the present invention pertains. The invention may, however, be embodied in many different forms and should not be construed as being limited to the examples set forth herein.

### Example 1

### 1. Preparation of Large Particle-diameter Positive Electrode Active Material

### <Preparation of Precursor>

After 4 L of distilled water was put in a co-precipitation reactor (capacity 20 L) and 100 mL of a 28 wt% aqueous ammonia solution was then added thereto while the temperature was maintained at 50 °C in a nitrogen atmosphere, a transition metal solution with a concentration of 3.2 mol/L, in which NiSO₄, CoSO₄, and MnSO₄ were mixed in amounts such that a molar ratio of nickel:cobalt:manganese was 0.7:0.1:0.2, and a 28 wt% aqueous ammonia solution were continuously added to the reactor at rates of 30 mL/hr and 42 mL/hr, respectively. The reaction solution was stirred at a rate of 400 rpm of the impeller, and was co-precipitated for 24 hours while 40 wt% of a sodium hydroxide solution was added in order to maintain the pH of the reaction solution at 9.0, thereby forming precursor particles.

The precursor particles were separated, washed, and then dried in a 130 °C oven, thereby preparing a precursor.

### <Preparation of Lithium Nickel-based Oxide>

The prepared precursor for a positive electrode active material as described above, LiOH, and ZrO₂ were mixed such that a molar ratio of (Ni+Co+Mn):Li:Zr was 1:1.05:0.0043, and then sintered at 850 °C for 10 hours, thereby preparing a lithium nickel-based oxide. The prepared lithium nickel-based oxide had an average particle diameter (D50) of 9 µm.

### 2. Preparation of Small Particle-diameter Positive Electrode Active Material

A precursor for a positive electrode active material, a lithium nickel-based oxide, and a positive electrode active material were prepared in the same manner as described above, except that the precursor for a positive electrode active material was prepared by co-precipitation for 12 hours when the precursor particles were formed. The prepared lithium nickel-based oxide had an average particle diameter (D50) of 4 µm.

### 3. Preparation of Positive Electrode Material

The large particle-diameter positive electrode active material and small particle-diameter positive electrode active material prepared as above were mixed in a weight ratio of 70:30.

Then, the positive electrode active material mixture and boric acid were mixed in a weight ratio of 1:0.00286, and the resulting mixture was heat-treated at 400 °C for 5 hours, thereby preparing a positive electrode material.

### Example 2

A large particle-diameter positive electrode active material, a small particle-diameter positive electrode active material, and a positive electrode material were prepared in the same manner as in Example 1, except that a sintering temperature was set to 840 °C when large particle-diameter and small particle-diameter lithium nickel-based oxide were prepared, and the positive electrode active material mixture and boric acid were mixed in a weight ratio of 1:0.00429 when the positive electrode material was prepared.

### Example 3

A large particle-diameter positive electrode active material, a small particle-diameter positive electrode active material, and a positive electrode material were prepared in the same manner as in Example 1, except that a sintering temperature was set to 840 °C when large particle-diameter and small particle-diameter lithium nickel-based oxide were prepared, and the positive electrode active material mixture and boric acid were mixed in a weight ratio of 1:0.00572 when the positive electrode material was prepared.

### Comparative Example 1

A large particle-diameter positive electrode active material, a small particle-diameter positive electrode active material, and a positive electrode material were prepared in the same manner as in Example 1, except that a sintering temperature was set to 860 °C when large particle-diameter and small particle-diameter lithium nickel-based oxide were prepared, and the positive electrode active material mixture and boric acid were mixed in a weight ratio of 1:0.00229 when the positive electrode material was prepared.

### Comparative Example 2

A large particle-diameter positive electrode active material, a small particle-diameter positive electrode active material, and a positive electrode material were prepared in the same manner as in Example 1, except that a sintering temperature was set to 840 °C when large particle-diameter and small particle-diameter lithium nickel-based oxide were prepared, and the positive electrode active material mixture and boric acid were mixed in a weight ratio of 1:0.00629 when the positive electrode material was prepared.

### Example 4

A large particle-diameter positive electrode active material, a small particle-diameter positive electrode active material, and a positive electrode material were prepared in the same manner as in Example 1, except that a sintering temperature was set to 840 °C when large particle-diameter and small particle-diameter lithium nickel-based oxide were prepared, and the positive electrode active material mixture and boric acid were mixed in a weight ratio of 1:0.00286 when the positive electrode material was prepared.

### Example 5

A large particle-diameter positive electrode active material, a small particle-diameter positive electrode active material, and a positive electrode material were prepared in the same manner as in Example 1, except that a sintering temperature was set to 830 °C when large particle-diameter and small particle-diameter lithium nickel-based oxide were prepared, and the positive electrode active material mixture and boric acid were mixed in a weight ratio of 1:0.00429 when the positive electrode material was prepared.

### Example 6

A large particle-diameter positive electrode active material, a small particle-diameter positive electrode active material, and a positive electrode material were prepared in the same manner as in Example 1, except that a sintering temperature was set to 830 °C when large particle-diameter and small particle-diameter lithium nickel-based oxide were prepared, and the positive electrode active material mixture and boric acid were mixed in a weight ratio of 1:0.00527 when the positive electrode material was prepared.

### Comparative Example 3

A large particle-diameter positive electrode active material, a small particle-diameter positive electrode active material, and a positive electrode material were prepared in the same manner as in Example 1, except that a sintering temperature was set to 850 °C when large particle-diameter and small particle-diameter lithium nickel-based oxide were prepared, and the positive electrode active material mixture and boric acid were mixed in a weight ratio of 1:0.00229 when the positive electrode material was prepared.

### Comparative Example 4

A large particle-diameter positive electrode active material, a small particle-diameter positive electrode active material, and a positive electrode material were prepared in the same manner as in Example 1, except that a sintering temperature was set to 830 °C when large particle-diameter and small particle-diameter lithium nickel-based oxide were prepared, and the positive electrode active material mixture and boric acid were mixed in a weight ratio of 1:0.00629 when the positive electrode material was prepared.

### Comparative Example 5

A large particle-diameter positive electrode active material, a small particle-diameter positive electrode active material, and a positive electrode material were prepared in the same manner as in Example 1, except that a sintering temperature was set to 860 °C when large particle-diameter and small particle-diameter lithium nickel-based oxide were prepared, and Al₂O₃ was mixed instead of boric acid such that a ratio of the positive electrode active material mixture:Al₂O₃ was a weight ratio of 1:0.00283 when the positive electrode material was prepared.

### Example 7

A large particle-diameter positive electrode active material, a small particle-diameter positive electrode active material, and a positive electrode material were prepared in the same manner as in Example 1, except that a sintering temperature was set to 830 °C when large particle-diameter and small particle-diameter lithium nickel-based oxide were prepared, and the positive electrode active material mixture and boric acid were mixed in a weight ratio of 1:0.00286 when the positive electrode material was prepared.

### Example 8

A large particle-diameter positive electrode active material, a small particle-diameter positive electrode active material, and a positive electrode material were prepared in the same manner as in Example 1, except that a sintering temperature was set to 820 °C when large particle-diameter and small particle-diameter lithium nickel-based oxide were prepared, and the positive electrode active material mixture and boric acid were mixed in a weight ratio of 1:0.00429 when the positive electrode material was prepared.

### Example 9

A large particle-diameter positive electrode active material, a small particle-diameter positive electrode active material, and a positive electrode material were prepared in the same manner as in Example 1, except that a sintering temperature was set to 820 °C when large particle-diameter and small particle-diameter lithium nickel-based oxide were prepared, and the positive electrode active material mixture and boric acid were mixed in a weight ratio of 1:0.00572 when the positive electrode material was prepared.

### Comparative Example 6

A large particle-diameter positive electrode active material, a small particle-diameter positive electrode active material, and a positive electrode material were prepared in the same manner as in Example 1, except that a sintering temperature was set to 840 °C when large particle-diameter and small particle-diameter lithium nickel-based oxide were prepared, and the positive electrode active material mixture and boric acid were mixed in a weight ratio of 1:0.00229 when the positive electrode material was prepared.

### Comparative Example 7

A large particle-diameter positive electrode active material, a small particle-diameter positive electrode active material, and a positive electrode material were prepared in the same manner as in Example 1, except that a sintering temperature was set to 820 °C when large particle-diameter and small particle-diameter lithium nickel-based oxide were prepared, and the positive electrode active material mixture and boric acid were mixed in a weight ratio of 1:0.00629 when the positive electrode material was prepared.

### Comparative Example 8

A large particle-diameter positive electrode active material, a small particle-diameter positive electrode active material, and a positive electrode material were prepared in the same manner as in Example 1, except that a sintering temperature was set to 830 °C when large particle-diameter and small particle-diameter lithium nickel-based oxide were prepared, and the positive electrode active material mixture and boric acid were mixed in a weight ratio of 1:0.00229 when the positive electrode material was prepared.

### Comparative Example 9

A large particle-diameter positive electrode active material, a small particle-diameter positive electrode active material, and a positive electrode material were prepared in the same manner as in Example 1, except that a sintering temperature was set to 820 °C when large particle-diameter and small particle-diameter lithium nickel-based oxide were prepared, and the positive electrode active material mixture and boric acid were mixed in a weight ratio of 1:0.00286 when the positive electrode material was prepared.

### Comparative Example 10

A large particle-diameter positive electrode active material, a small particle-diameter positive electrode active material, and a positive electrode material were prepared in the same manner as in Example 1, except that a sintering temperature was set to 810 °C when large particle-diameter and small particle-diameter lithium nickel-based oxide were prepared, and the positive electrode active material mixture and boric acid were mixed in a weight ratio of 1:0.00429 when the positive electrode material was prepared.

### Comparative Example 11

A large particle-diameter positive electrode active material, a small particle-diameter positive electrode active material, and a positive electrode material were prepared in the same manner as in Example 1, except that a sintering temperature was set to 810 °C when large particle-diameter and small particle-diameter lithium nickel-based oxide were prepared, and the positive electrode active material mixture and boric acid were mixed in a weight ratio of 1:0.00572 when the positive electrode material was prepared.

### Comparative Example 12

A large particle-diameter positive electrode active material, a small particle-diameter positive electrode active material, and a positive electrode material were prepared in the same manner as in Example 1, except that a sintering temperature was set to 800 °C when large particle-diameter and small particle-diameter lithium nickel-based oxide were prepared, and the positive electrode active material mixture and boric acid were mixed in a weight ratio of 1:0.00629 when the positive electrode material was prepared.

### Comparative Example 13

A large particle-diameter positive electrode active material, a small particle-diameter positive electrode active material, and a positive electrode material were prepared in the same manner as in Example 1, except that a sintering temperature was set to 810 °C when large particle-diameter and small particle-diameter lithium nickel-based oxide were prepared, and the positive electrode active material mixture and boric acid were mixed in a weight ratio of 1:0.00229 when the positive electrode material was prepared.

### Comparative Example 14

A large particle-diameter positive electrode active material, a small particle-diameter positive electrode active material, and a positive electrode material were prepared in the same manner as in Example 1, except that a sintering temperature was set to 800 °C when large particle-diameter and small particle-diameter lithium nickel-based oxide were prepared, and the positive electrode active material mixture and boric acid were mixed in a weight ratio of 1:0.00286 when the positive electrode material was prepared.

### Comparative Example 15

A large particle-diameter positive electrode active material, a small particle-diameter positive electrode active material, and a positive electrode material were prepared in the same manner as in Example 1, except that a sintering temperature was set to 790 °C when large particle-diameter and small particle-diameter lithium nickel-based oxide were prepared, and the positive electrode active material mixture and boric acid were mixed in a weight ratio of 1:0.00429 when the positive electrode material was prepared.

### Comparative Example 16

A large particle-diameter positive electrode active material, a small particle-diameter positive electrode active material, and a positive electrode material were prepared in the same manner as in Example 1, except that a sintering temperature was set to 780 °C when large particle-diameter and small particle-diameter lithium nickel-based oxide were prepared, and the positive electrode active material mixture and boric acid were mixed in a weight ratio of 1:0.00572 when the positive electrode material was prepared.

### Comparative Example 17

A large particle-diameter positive electrode active material, a small particle-diameter positive electrode active material, and a positive electrode material were prepared in the same manner as in Example 1, except that a sintering temperature was set to 770 °C when large particle-diameter and small particle-diameter lithium nickel-based oxide were prepared, and the positive electrode active material mixture and boric acid were mixed in a weight ratio of 1:0.00629 when the positive electrode material was prepared.

### Example 10

A large particle-diameter positive electrode active material, a small particle-diameter positive electrode active material, and a positive electrode material were prepared in the same manner as in Example 1, except that a sintering temperature was set to 840 °C when large particle-diameter and small particle-diameter lithium nickel-based oxide were prepared, and the positive electrode active material mixture, boric acid, and WO₃ were mixed in a weight ratio of 1:0.00572:0.00504 when the positive electrode material was prepared.

### Experimental Example 1

A BET specific surface area and a coating element (B, Al, or W) content of each of the positive electrode material powder prepared according to Examples 1 to 10 and Comparative Examples 1 to 17 were measured.

The specific surface area was measured by the BET method using BELSORP-mini after 3 g of the positive electrode material powder was collected, and the boron content was measured by the ICP method using ICP-OES (PerkinElmer, Optima7300DV) equipment after 1 g of the positive electrode material powder was collected.

Measurement results are listed in Table 1 below.

**[Table 1]**

| | Specific surface area [m²/g] | Coating element | Coating element content [ppm] |
|---|---|---|---|
| Example 1 | 0.2 | B | 500 |
| Example 2 | 0.2 | B | 750 |
| Example 3 | 0.2 | B | 1000 |
| Comparative Example 1 | 0.2 | B | 400 |
| Comparative Example 2 | 0.2 | B | 1100 |
| Example 4 | 0.3 | B | 500 |
| Example 5 | 0.3 | B | 750 |
| Example 6 | 0.3 | B | 1000 |
| Comparative Example 3 | 0.3 | B | 400 |
| Comparative Example 4 | 0.3 | B | 1100 |
| Comparative Example 5 | 0.3 | Al | 750 |
| Example 7 | 0.4 | B | 500 |
| Example 8 | 0.4 | B | 750 |
| Example 9 | 0.4 | B | 1000 |
| Comparative Example 6 | 0.4 | B | 400 |
| Comparative Example 7 | 0.4 | B | 1100 |
| Comparative Example 8 | 0.5 | B | 400 |
| Comparative Example 9 | 0.5 | B | 500 |
| Comparative Example 10 | 0.5 | B | 750 |
| Comparative Example 11 | 0.5 | B | 1000 |
| Comparative Example 12 | 0.5 | B | 1100 |
| Comparative Example 13 | 1 | B | 400 |
| Comparative Example 14 | 1 | B | 500 |
| Comparative Example 15 | 1 | B | 750 |
| Comparative Example 16 | 1 | B | 1000 |
| Comparative Example 17 | 1 | B | 1100 |
| Example 10 | 0.4 | B | 1000 |
| | | W | 4000 |

### Experimental Example 2: Evaluation of Particle Breakage

Three grams of the positive electrode material powder prepared according to Examples 1 to 10 and Comparative Examples 1 to 17 were put into a cylindrical metal mold having a diameter of 2 cm, pressed at a pressure of 9 tons, and then a generation rate of fine powder less than 1 um was determined by measuring a volume cumulative particle size distribution (PSD). The particle size distribution was measured using S-3500 made by Microtrac, Inc., and the generation rate of fine powder having a particle diameter of 1 µm or less was converted into volume% with respect to the total weight of the positive electrode material. Measurement results are listed in Table 2 below.

### Experimental Example 3:

The surfaces and cross-sections of the large particle-diameter positive electrode active material particles of the positive electrode materials prepared according to Example 8 and Comparative Example 11 were observed through SEM.

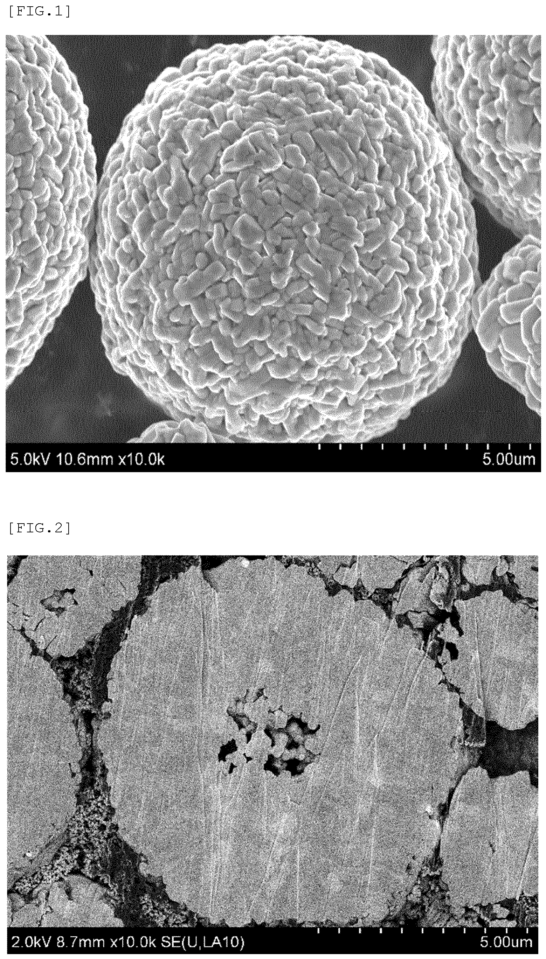

FIG. 1 is a SEM image showing the surface of the large particle-diameter positive electrode active material in Example 8, and FIG. 2 is a SEM image showing a cross-section of the large particle-diameter positive electrode active material in Example 8.

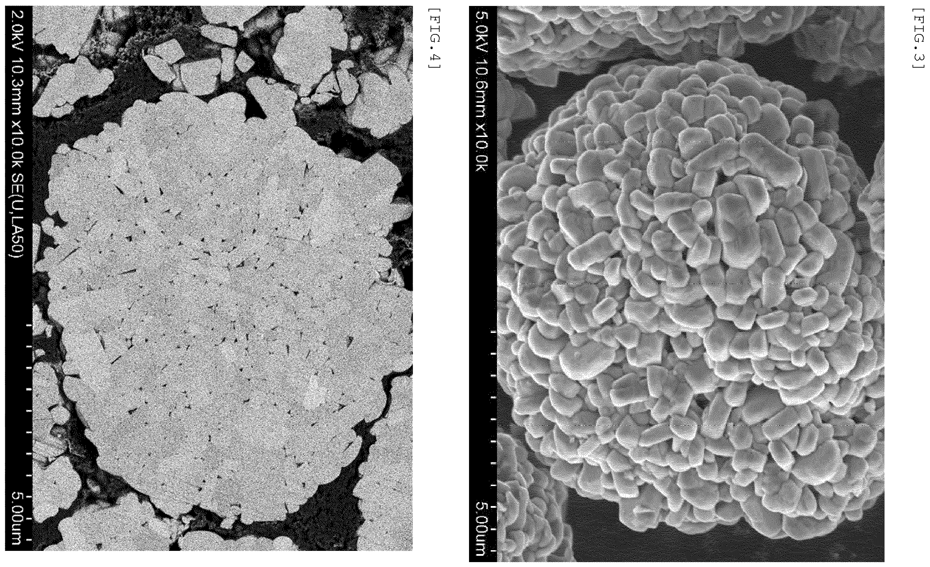

FIG. 3 is a SEM image showing the surface of the large particle-diameter positive electrode active material in Comparative Example 11, and FIG. 4 is a SEM image showing a cross-section of the large particle-diameter positive electrode active material in Comparative Example 11.

Referring to FIGS. 1-4, it may be confirmed that the positive electrode active material in Example 8 has higher surface density and less inner pores than the positive electrode active material in Comparative Example 11.

### Experimental Example 4: Evaluation of Life Characteristics

A positive electrode slurry was prepared by mixing each of the positive electrode materials prepared in Examples 1-10 and Comparative Examples 1-17, carbon black, and a PVDF binder in a weight ratio of 96:2:2 in N-methylpyrrolidone. The positive electrode slurry was coated on one surface of an aluminum current collector, dried at 100 °C, and then rolled to prepare a positive electrode.

A lithium metal electrode was used as a negative electrode.

An electrode assembly was manufactured by interposing a porous polyethylene separator between the positive electrode and the negative electrode, was positioned inside a battery case, and an electrolyte solution was injected into the case, thereby manufacturing a half-cell. The electrolyte solution was prepared by dissolving 1.0 M LiPF₆ in a mixed organic solvent in which ethylene carbonate/ethyl methyl carbonate/diethyl carbonate were mixed in a volume ratio of 3:4:3.

Each of the half-cell batteries as manufactured above was charged at 45 °C under a CC-CV mode at 0.7 C until it reached 4.4 V, discharged at a constant current of 0.5 C until 3.0 V, which was set as one cycle. Then 50 cycles of charging and discharging experiment was performed, and the life characteristics were evaluated by measuring capacity retention. Measurement results are listed in Table 2 below.

**[Table 2]**

| | Generation rate of fine powder (vol%) | Capacity retention (%) |
|---|---|---|
| Example 1 | 2 | 99 |
| Example 2 | 1 | 99 |
| Example 3 | 2 | 98 |
| Comparative Example 1 | 4 | 89 |
| Comparative Example 2 | 2 | 93 |
| Example 4 | 1 | 99 |
| Example 5 | 2 | 99 |
| Example 6 | 2 | 99 |
| Comparative Example 3 | 4 | 90 |
| Comparative Example 4 | 4 | 95 |
| Comparative Example 5 | 8 | 92 |
| Example 7 | 2 | 99 |
| Example 8 | 1 | 99 |
| Example 9 | 2 | 99 |
| Comparative Example 6 | 5 | 91 |
| Comparative Example 7 | 5 | 96 |
| Comparative Example 8 | 6 | 90 |
| Comparative Example 9 | 6 | 93 |
| Comparative Example 10 | 5 | 95 |
| Comparative Example 11 | 4 | 94 |
| Comparative Example 12 | 6 | 93 |
| Comparative Example 13 | 12 | 89 |
| Comparative Example 14 | 10 | 91 |
| Comparative Example 15 | 10 | 90 |
| Comparative Example 16 | 8 | 91 |
| Comparative Example 17 | 9 | 91 |
| Example 10 | 3 | 99 |

Referring to Table 2 above, it may be confirmed that the positive electrode materials in Examples 1 to 10, in which the BET and B content satisfy the scope of the present invention, have remarkably small amounts of fine powder generated during 9-tone pressing compared to the positive electrode materials prepared according to Comparative Examples, and show excellent life characteristics when applied to the secondary battery.

### Experimental Example 5: Evaluation of Initial Resistance Characteristics

A positive electrode slurry was prepared by mixing each of the positive electrode materials prepared in Examples 7, 8, and 9 and Comparative Examples 2, 4, 9, 10, and 11, carbon black, and a PVDF binder in a weight ratio of 96:2:2 in N-methylpyrrolidone. The positive electrode slurry was coated on one surface of an aluminum current collector, dried at 100 °C, and then rolled to prepare a positive electrode.

A lithium metal electrode was used as a negative electrode.

An electrode assembly was manufactured by interposing a porous polyethylene separator between the positive electrode and the negative electrode, was positioned inside a battery case, and an electrolyte solution was injected into the case, thereby manufacturing a half-cell. The electrolyte solution was prepared by dissolving 1.0 M LiPF₆ in a mixed organic solvent in which ethylene carbonate/ethyl methyl carbonate/diethyl carbonate were mixed in a volume ratio of 3:4:3.

Each of the half-cell batteries as manufactured above was charged at 0.7 C until the voltage reached 4.4 V, and then discharged at a constant current of 0.5 C until 3.0 V. The initial resistance was calculated by dividing, by the current value, the voltage change for the initial 30-second period of time after the discharge was started, and the resistance of the remaining cells was expressed as a relative value based on the resistance (100%) of the cell manufactured using the positive electrode material of Example 9. Measurement results are listed in Table 3 below.

**[Table 3]**

| | Initial resistance (%) |
|---|---|
| Example 7 | 96 |
| Example 8 | 98 |
| Example 9 | 100 |
| Comparative Example 2 | 112 |
| Comparative Example 4 | 107 |
| Comparative Example 9 | 95 |
| Comparative Example 10 | 96 |
| Comparative Example 11 | 98 |

As shown in Table 3 above, it may be confirmed that in the case of the cells to which the positive electrode materials of Examples 7 to 8 are applied, the initial resistance is not significantly increased but is maintained at the same level even though the cells of Examples 7 to 8 have a specific surface area lower than those of Comparative Examples 9 to 11 having the same coating element content. Meanwhile, it may be confirmed that in the case of the cells using the positive electrode materials of Comparative Examples 2 and 4 in which the coating element content is out of the scope of the present invention, the initial resistance is significantly increased.

## Claims

1. A positive electrode material comprising:
a positive electrode active material comprising a lithium nickel-based oxide having a mole fraction of nickel of 50 mol% to 90 mol% among metallic elements excluding lithium; and
a coating layer comprising boron (B), which is formed on the surface of the lithium nickel-based oxide,
wherein the positive electrode material has a BET specific surface area of 0.2 m²/g to 0.4 m²/g, and the boron (B) is included in an amount of 500 ppm to 1,000 ppm based on the total weight of the positive electrode material.

2. The positive electrode material of claim 1, wherein the lithium nickel-based oxide has composition represented by Formula 1 below:
[Formula 1] Liₓ[NiₐCo_{b}Mn_{c}M¹_{d}]O₂
wherein, in Formula 1 above, M¹ is at least one selected from the group consisting of Zr, W, Y, Ba, Ca, Ti, Mg, Ta, and Nb, and 0.8≤x≤1.2, 0.5≤a≤0.9, 0<b<0.5, 0<c<0.5, and 0≤d≤0.2 are satisfied.

3. The positive electrode material of claim 2, wherein M¹ above is Zr.

4. The positive electrode material of claim 2, wherein Zr above is included in an amount of 4,000 ppm to 5,000 ppm based on the total weight of the positive electrode material.

5. The positive electrode material of claim 1, wherein the coating layer further comprises tungsten (W).

6. The positive electrode material of claim 5, wherein the tungsten (W) is included in an amount of 4,000 ppm or less based on the total weight of the positive electrode material.

7. The positive electrode material of claim 1, wherein the positive electrode active material has a crystalline grain size of 90 nm to 110 nm.

8. The positive electrode material of claim 1, wherein the positive electrode active material is a secondary particle in which multiple primary particles are aggregated, and
the primary particles have an average particle diameter of 500 nm to 1 um.

9. The positive electrode material of claim 1, wherein the positive electrode material has a bimodal particle size distribution.

10. The positive electrode material of claim 9, wherein the positive electrode material comprises a large particle-diameter positive electrode active material having an average particle diameter D50 of 8 um or more and a small particle-diameter positive electrode active material having an average particle diameter D50 of 6 um or less.

11. The positive electrode material of claim 10, wherein the large particle-diameter positive electrode active material and the small particle-diameter positive electrode active material are included in a weight ratio of 9:1 to 6:4.

12. A positive electrode comprising the positive electrode material according to any one of claims 1 to 11.

13. A lithium secondary battery comprising the positive electrode of claim 12.
